# EUROPÄISCHE PATENTANMELDUNG

(11) **EP 4 668 148 A1**
(43) Veröffentlichungstag der Anmeldung: **24.12.2025**
(21) Anmeldenummer: 24183114.8
(22) Anmeldetag: 19.06.2024
(51) Int. Cl.: G06F 21/62, H04L 9/40, H04L 67/10

(54) **VERFAHREN ZUR KOMMUNIKATION ZWISCHEN EINEM INTERNEN KI-SYSTEM UND EINEM EXTERNEN KI-SYSTEM**

(71) Anmelder: Hurra Communications GmbH, 70173 Stuttgart (DE)
(72) Erfinder: Schweier, René, 70599 Stuttgart (DE)
(74) Vertreter: Wörz, Volker Alfred

(57) **Zusammenfassung**

Die Erfindung betrifft ein Verfahren zur Kommunikation eines internen KI-Systems (1) mit einem externen KI-System (20), wobei eine Anfrage an das interne KI-System (1) eine Anfrage an das externe KI-System (20) auslösen kann. Um auch im Falle des Vorliegens von vertraulichen Informationen die Möglichkeit zu haben, von einem externen KI-System (20) weitere Informationen für das Beantworten einer Anfrage an das interne KI-System (1) zu erhalten, ohne die Vertraulichkeit der Informationen zu gefährden, wird vorgeschlagen dass das interne KI-System (1) darauf trainiert ist zu erkennen, ob eine an ein externes KI-System (20) zu übermittelnde Information eine vertrauliche Information ist und falls dies der Fall ist, diese Information dahingehend verändert wird, dass ihre Vertraulichkeit bewahrt bleibt und sie dennoch zum Abrufen zusätzlicher Informationen von dem externen KI-System (20) herangezogen werden kann.

## Beschreibung

Die vorliegende Erfindung betrifft ein Verfahren zur Kommunikation von einem internen KI-System mit einem externen KI-System sowie ein internes KI-System, das für eine Kommunikation mit einem externen KI-System eingerichtet ist.

Ein internes KI-System kann beispielsweise die Funktionalität eines internem Chatbots umfassen, und somit zum Beispiel als Unternehmen-Chatbot, also als unternehmensinterner Chatbot ausgebildet sein, der speziell für die interne Nutzung innerhalb eines Unternehmens entwickelt und anhand der unternehmensinternen Daten trainiert wurde, um die Mitarbeiter bei verschiedenen Aufgaben zu unterstützen.

Ein Chatbot und allgemein ein KI-System, wie es im Rahmen der vorliegenden Patentanmeldung zu verstehen ist, nutzt künstliche Intelligenz, um natürliche Kommunikation mit Benutzern (mittels Sprachausgabe (Gespräche) oder Textausgabe (schriftliche Nachrichten)) zu führen, ihnen bei der Lösung von Problemen oder der Beantwortung von Fragen zu helfen, selbständig Aktionen auszuführen und mit anderen KI-Systemen zu kommunizieren. Ein derartiges KI-System kann in verschiedenen Bereichen eingesetzt werden, wie z.B. im Kundenservice, im Bildungsbereich oder um Antworten auf technische Fragestellungen zu erhalten.

Interne KI-Systeme werden aktuell besonders häufig als unternehmensinterne Chatbots in Unternehmen eingesetzt und unterstützen den Ablauf vieler Prozesse. Bspw. ermöglichen sie eine effiziente interne Kommunikation zwischen Mitarbeitern, Teams und Abteilungen dadurch, dass Begriffe und Phrasen der unternehmensinternen Nomenklatur entsprechen und stets auf die aktuellen Daten zugegriffen werden kann. Darüber hinaus dienen interne Chatbots als Wissensdatenbank, um Mitarbeitern schnell und einfach Informationen zur Verfügung zu stellen, die mittels eines normalen Dialogs abgefragt werden können. Häufig gestellte Fragen von Kunden können durch einen Chatbot automatisch beantwortet werden und neue Mitarbeiter können sich schneller in das Unternehmen einarbeiten, da stets aktuelle Informationen über Unternehmensrichtlinien, Prozesse und Ansprechpartner automatisch von dem KI-System und insbesondere von dessen Chatbot-Funktionalität bereitgestellt werden können. Auch Automatisierungen wiederkehrender Prozesse können von einem internen KI-System ausgeführt werden, wie bspw. das Zusammenstellen von Buchhaltungsunterlagen und das Erstellen von Steuererklärungen.

Um mit den Benutzern in einer natürlichen Sprache kommunizieren zu können, verwendet ein Chatbot ein sogenanntes Large Language Model (LLM). Ein LLM ist ein Modell der künstlichen Intelligenz, das darauf trainiert ist, natürliche Sprache zu verstehen und zu generieren. Diese Modelle verwenden maschinelles Lernen und neuronale Netzwerke, um sehr große Mengen an Daten zu verarbeiten und natürliche Sprache zu modellieren. Ein Large Language Model wird oft als Teil der KI-Engine in Chatbots verwendet, um die Fähigkeit des Chatbots zu verbessern, menschliche Sprache zu verstehen, komplexe Anfragen zu verarbeiten und natürliche Konversationen mit Benutzern zu führen. Diese Modelle können insbesondere auch kontextbezogene Informationen nutzen, um relevante Antworten zu generieren und den Dialogfluss zu steuern und somit die Konversation effektiver und effizienter zu gestalten sowie die Benutzererfahrung zu verbessern.

Ein internes KI-System, das den internen Chatbot realisiert, wird typischerweise anhand der unternehmensinternen Daten trainiert. Dies bedeutet, dass der Chatbot für das Generieren der Antworten auf die Anfragen der Mitarbeiter die internen Informationen bzw. das interne Wissen verwendet und somit die Prozesse des Unternehmens effektiv unterstützt.

Ein internes KI-System innerhalb eines Unternehmens kann dazu ausgebildet sein, dass eine Anfrage an das interne KI-System eine weitere Anfrage an mindestens ein externes KI-System außerhalb des Unternehmens auslöst. Die weitere Anfrage an das externe KI-System kann in dem internen KI-System bei Bedarf oder immer automatisch generiert werden. Die weitere Anfrage kann an eines oder mehrere externe KI-Systeme übermittelt werden. Im Rahmen der internen und externen Anfragen werden typischerweise Informationen übermittelt, zu denen das interne bzw. externe KI-System Antworten liefern soll. Die Übermittlung der Anfragen und/oder Antworten erfolgt bevorzugt über ein Datenübertragungs-Netzwerk, insbesondere über das Internet.

Falls beispielsweise das intern verfügbare Wissen nicht ausreichend ist, um eine Frage zu beantworten, richtet der interne Chatbot in vielen aktuellen Realisierungen eine Anfrage an ein externes KI-System, beispielsweise einen externen Chatbot, der eine entsprechende Antwort zur Verfügung stellt. Das externe KI-System verfügt typischerweise über eine Wissensdatenbank, die auf Grundlage eines Großteils der über das Internet abrufbaren Informationen aufgebaut ist. Ein Beispiel solcher externer KI-Systeme ist der unter der Bezeichnung ChatGPT angebotene Dienst des Unternehmens ,OpenAI', oder die von dem Unternehmen 'Microsoft' bereitgestellten und unter der Bezeichnung Azure AI' zusammengefassten Dienste und Technologien. Selbstverständlich gibt es eine Mehrzahl an weiteren externen KI-Systemen, die von einem internen KI-System für das Generieren einer Antwort auf eine Frage eines Benutzers herangezogen werden können.

Die von einem externen KI-System oder einem externen Chatbot bereitgestellten Informationen reichen von alltäglichen Informationen wie eine Wettervorhersage bis zu ganz speziellen wissenschaftlichen Informationen, die beispielsweise von hierfür geeigneten Portalen über das Internet abrufbar oder die aufgrund des Trainierens des externen KI-Systems durch das Scannen der bei Bibliotheken elektronisch abgespeicherten Informationen abrufbar sind.

Benötigt das interne KI-System für das Beantworten einer Anfrage eine weitere Information, die intern nicht vorhanden ist, so richtet es eine weitere Anfrage an ein externes KI-System. Diese Anfrage kann interne Informationen enthalten, wie beispielsweise den Namen eines Mitarbeiters, falls automatisch eine Reise gebucht werden soll, oder internes technisches Wissen, um nach weiterführendem Wissen in anderen Datenbanken zu suchen. Das externe KI-System generiert hierauf eine Antwort und sendet diese Antwort an das interne KI-System zurück. Das interne KI-System bereitet die von dem externen KI-System erhaltenen Informationen auf, kombiniert sie gegebenenfalls mit intern verfügbaren Informationen, erzeugt eine Antwort in einem geeigneten Format und sendet diese Antwort an den anfragenden Benutzer zurück.

Die Anfrage, die das interne KI-System an das externe KI-System sendet, kann Informationen umfassen, die gemäß einer internen Sicherheitsrichtlinie des Unternehmens, das das interne KI-System betreibt, als sicherheitsrelevant einzustufen sind und deshalb nicht nach außen gelangen sollen. In einem Unternehmen, in dem zuverlässig verhindert werden soll, dass interne Informationen nach außen gelangen, wird deshalb häufig eine Kommunikation mit einem externen KI-System vollständig verhindert. Dies führt allerdings dazu, dass manche Anfragen nicht zufriedenstellend beantwortet und Aufgaben, die das KI-System automatisch erledigen soll, nicht oder nicht zufriedenstellend ausgeführt werden können.

Zwar ist es in manchen Fällen möglich, bei dem Betreiber eines externen KI-Systems einen gesicherten Speicherbereich zu reservieren mit dem Ziel, eine Weitergabe der internen Informationen zu verhindern, jedoch kann dies niemals zu 100% garantiert werden, denn es besteht immer die Möglichkeit, dass eine Weitergabe dieser Informationen beispielsweise aufgrund eines technischen Defekts in dem Serversystem des Betreibers des externen KI-Systems oder aufgrund eines Hackerangriffs erfolgt.

Aufgabe der Erfindung ist es, eine Möglichkeit bereitzustellen, die eine Kommunikation zwischen einem internen KI-System und einem externen KI-System auch bei Vorliegen von vertraulichen Informationen ermöglicht bzw. nicht von vorneherein ausschließt und dennoch die Sicherheit der an das externe KI-System gesendeten vertraulichen Informationen gewährleistet.

Die Aufgabe wird durch ein System der eingangs genannten Art dadurch gelöst, dass, das interne KI-System darauf trainiert ist zu erkennen, ob eine im Rahmen der weiteren Anfrage an ein externes KI-System zu übermittelnde Information eine vertrauliche Information ist, und falls dies der Fall ist, diese Information dahingehend verändert wird, dass die Vertraulichkeit der vertraulichen Informationen gewahrt bleibt, und die veränderten Informationen zusammen mit der weiteren Anfrage an das externe KI-System zum Abrufen zusätzlicher Informationen von dem externen KI-System herangezogen bzw. übermittelt werden.

Die Erfindung nutzt die Fähigkeit eines KI-System, insbesondere eines internen KI-Systems, aus Eigenschaften von zugrundeliegenden Daten oder Informationen zu erkennen und bspw. in Bezug auf ihre Vertraulichkeit zu bewerten. Hierzu umfasst ein KI-System üblicherweise verschiedene Technologien und Algorithmen, die es dem KI-System ermöglichen, kognitive Aufgaben mithilfe verschiedener Techniken und Modelle der künstlichen Intelligenz, wie z.B. maschinelles Lernen, neuronale Netzwerke, natürliche Sprachverarbeitung (NLP), Computer Vision, Expertensysteme und mehr, auszuführen. Diese Technologien werden von KI-Systemen genutzt, um Muster in Daten zu erkennen, Vorhersagen zu treffen, Probleme zu lösen und intelligente Entscheidungen zu treffen.

Vorliegend wird das interne KI-System zusätzlich zu dem geplanten Einsatzbereich erfindungsgemäß darauf trainiert zu erkennen, ob eine im Rahmen einer Anfrage von einem Benutzer empfangene Information, die im Rahmen einer weiteren Anfrage an ein externes KI-System gesendet werden soll, um von dem externen KI-System Antworten bzw. weitere Informationen für das Bearbeiten einer der Anfrage zugrundeliegenden Aufgabe oder einer von dem Benutzer gestellten Anfrage zu erhalten, eine vertrauliche Information ist. Falls dies der Fall ist, entscheidet das erfindungsgemäß ausgebildete interne KI-System automatisch, ob diese Information überhaupt und gegebenenfalls in welcher Form an ein externes KI-System gesendet werden soll. So wäre es denkbar, das Übermitteln der Information an das externe KI-System ganz zu unterbinden. Alternativ kann die Information vor dem Senden an das externe KI-System derart verändert werden, dass ihre Vertraulichkeit gewahrt ist. In einem einfachen Fall kann der Inhalt der Information, bspw. bestimmte Daten, einfach durch einen anderen Inhalt, bspw. andere Daten, ersetzt werden. Vorzugsweise wird hierbei jedoch eine als vertraulich erkannte Information, die an das externe KI-System gesendet werden soll, automatisch vor dem Senden verschlüsselt und falls diese verschlüsselte Information in der Antwort von dem externen KI-System enthalten ist, wieder entschlüsselt.

Durch das erfindungsgemäße Verfahren wird sichergestellt, dass ein internes KI-System die Dienste eines externen KI-Systems nutzen und somit Aufgaben besser lösen kann, ohne dass vertrauliche, unternehmensinterne Informationen Gefahr laufen, extern veröffentlicht zu werden und dort sichtbar zu sein. Hierzu können vertrauliche Informationen in dem internen KI-System automatisch erkannt werden. Dies kann dadurch erfolgen, dass die in einer Anfrage enthaltenen Informationen bzw. die konkreten Daten ausgewertet werden. Insbesondere können alle Daten, die sich in einem dem internen KI-System zugänglichen Datenbereich befinden, daraufhin untersucht werden, ob sie vertraulich sind und es kann aufgrund dieser Eigenschaft bei einer Anfrage an ein externes KI-System automatisch entschieden werden, wie diese vertraulichen Informationen zu behandeln sind.

Wird entschieden, die vertraulichen Informationen zu verändern und sie in der veränderten Form an das externe KI-System zu übermitteln, so kann dies beispielsweise mittels einer sogenannten Hash-Verschlüsselung erreicht werden. Eine Hash-Verschlüsselung ist ein Verfahren zur Umwandlung von Daten in eine kryptografische Zeichenfolge fester Länge, die als Hash-Wert bezeichnet wird. Ein Hash-Wert ist eine eindeutige, nicht umkehrbare Darstellung der Eingabedaten und kann vorliegend verwendet werden, um die Integrität und Sicherheit der vertraulichen Daten zu gewährleisten, die an ein externes KI-System gesendet werden sollen.

Wenn das externe KI-System die auf diese Weise verschlüsselten Daten bearbeitet und zusammen mit den Ergebnissen bzw. zusätzlichen Informationen an das anfragende interne KI-System wieder zurücksendet, so kann das interne KI-System anhand der zugeordneten Hash-Werte die verschlüsselten Informationen den ursprünglichen, vertraulichen Daten zuordnen und diese ursprünglichen Daten verwenden, um beispielsweise eine Antwort an eine Anfrage eines Benutzers, der Zugriff auf das Intranet hat, zu generieren.

Erfindungsgemäß wird also gewährleistet, dass interne vertrauliche Informationen außerhalb des internen Systems nicht gelesen werden können und dennoch Anfragen an externe KI-Systeme gesendet werden können, ohne die Vertraulichkeit der Informationen zu gefährden.

Gemäß einer möglichen Ausbildung des erfindungsgemäßen Verfahrens umfasst das interne KI-System einen Chatbot. Ein Chatbot ist eine besonders akzeptierte und effizient konfigurierbare Anwendung, die es Mitarbeitern in einem Unternehmen ermöglicht, das in dem Unternehmen vorhandene Wissen zu nutzen und Aufgaben besser auszuführen. Gerade bei Chatbots besteht jedoch unter anderem aufgrund der Vielzahl von Anfragen das Problem, dass vertrauliche Daten für die Verarbeitung der Anfrage herangezogen werden müssen und andererseits für eine Beantwortung der Anfrage zusätzliche Informationen benötigt werden, die von einem externen KI-System zur Verfügung gestellt werden. Der Einsatz des erfindungsgemäßen Verfahrens kann hier folglich besonders viele Vorteile für die Kommunikation und das Wissensmanagement in dem Unternehmen bieten.

Vorzugsweise werden die dem internen KI-System zur Verfügung stehenden internen Informationen bezüglich einer Vertraulichkeitsstufe klassifiziert und in Abhängigkeit von der jeweiligen Vertraulichkeitsstufe wird automatisch entschieden, auf welche Weise eine vertrauliche Information vor dem Senden an das externe KI-System verändert wird. Insbesondere kann vorgesehen sein, dass für Informationen, deren Vertraulichkeitsstufe einen vorgebbaren Wert überschreiten, das Senden dieser Informationen an das externe KI-System vollständig verhindert wird.

Hierdurch kann eine verfeinerte Abstimmung zwischen dem Grad der Vertraulichkeit und der Geschwindigkeit der Bearbeitung einer Anfrage einerseits sowie der für die Beantwortung einer Anfrage nutzbaren Informationen erreicht werden. Für Informationen, die nur gering sicherheitsrelevant sind, kann beispielsweise ein kurzes und schnelles Verschlüsselungsverfahren verwendet werden, wohingegen bei extrem sensiblen Daten vollständig darauf verzichtet wird, diese Daten einem externen KI-System zur Verfügung zu stellen.

Gemäß einer vorteilhaften Weiterbildung des erfindungsgemäßen Verfahrens, werden vertraulichen Informationen mittels einer homomorphen Verschlüsselung vor dem Weiterleiten an ein externes KI-System verschlüsselt.

Eine Homomorphe Verschlüsselung ist eine spezielle Art der Verschlüsselungstechnik, bei der Operationen auf verschlüsselten Daten durchgeführt werden können, ohne dass die Daten zuerst entschlüsselt werden müssen. Das bedeutet, dass die verschlüsselten Daten direkt Operationen wie Addition, Multiplikation oder anderen mathematische Operationen unterworfen werden können, und das Ergebnis dieser Operationen entspricht dem Ergebnis, das man erhalten würde, wenn man die gleichen Operationen auf den unverschlüsselten Daten durchführen würde. Eine Homomorphe Verschlüsselung ist folglich vorliegend besonders nützlich, um als vertraulich eingestufte Informationen an ein externes KI-System zu übermitteln und von diesem verarbeiten zu lassen, ohne dass die Daten entschlüsselt werden müssen. Insbesondere eine vollständig homomorphe Verschlüsselung kann hier vorteilhaft eingesetzt werden, weil dadurch eine Vielzahl von Operationen auf den so verschlüsselten Daten möglich ist.

Vorzugsweise ist das interne KI-System so ausgebildet, dass eine Mehrzahl von externen KI-Systemen von dem internen KI-System um weitere Informationen angefragt werden können und das interne KI-System für jedes der externen KI-Systeme separat entscheidet, ob und gegebenenfalls wie eine vertrauliche Information vor dem Senden an das jeweilige KI-System verändert wird.

Somit kann je nach dem, wie gut der Datenschutz bei einem externen KI-System realisiert ist, entschieden werden, ob und gegebenenfalls auf welche Weise vertrauliche Informationen an dieses KI-System übermittelt werden. Beispielsweise kann somit ermöglicht werden, vertrauliche Daten, die nur gering sicherheitsrelevant sind, einem externen KI-System unverschlüsselt zur Verfügung zu stellen, falls dieses externe KI-System besonders zuverlässig die Datensicherheit gewährleistet, wohingegen an ein externes KI-System, das wenig Wert auf Datensicherheit legt bzw. diese Daten für eigene Zwecke weiterverwendet, bereits nur gering sicherheitsrelevante Daten ausschließlich vollständig verschlüsselt und mittlere oder hoch sicherheitsrelevante Daten überhaupt nicht übertragen werden. Selbstverständlich sind dies nur Beispiele für mögliche Strategien, die unter anderem auch in Abhängigkeit von der Art des Unternehmens und der Art der zu erwartenden Anfragen ausgewählt bzw. erstellt werden.

Gemäß einer weiteren vorteilhaften Ausführungsform übermittelt das interne KI-System eine bestimmte Anfrage parallel an mindestens zwei externe KI-Systeme. Nach dem Erhalt der Antworten führt es automatisch eine Plausibilitätsprüfung der erhaltenen Antworten durch und führt nur diejenigen Antworten einer weiteren Verarbeitung zu, die eine ausreichend hohe, bevorzugt die höchste Plausibilitätsstufe aufweisen. Hierdurch wird die Möglichkeit eines internen KI-Systems, möglichst korrekte Antworten zu generieren nochmals verbessert, da es gemäß dieser Ausführungsform darauf trainiert sein kann, automatische Plausibilitätsprüfungen durchzuführen und nur die plausiblen Antworten einer weiteren Verarbeitung zuzuführen.

Die Aufgabe wird auch durch ein KI-System, insbesondere ein internes KI-System, das die Verwaltung vertraulicher Daten umfasst, wobei eine Anfrage an das interne KI-System eine Anfrage an mindestens ein externes KI-System auslösen kann, dadurch gelöst, dass das interne KI-System darauf trainiert ist zu erkennen, ob eine an ein externes KI-System zu übermittelnde Information eine vertrauliche Information ist und falls dies der Fall ist, das interne KI-System darauf trainiert ist, automatisch zu entscheiden, ob diese Information dahingehend verändert wird, dass ihre Vertraulichkeit bewahrt bleibt und sie dennoch zum Abrufen zusätzlicher Informationen von dem externen KI-System herangezogen werden kann oder ob diese vertrauliche Information nicht an ein externes KI-System gesendet wird.

Ein derartig ausgestaltetes KI-System ermöglicht die Durchführung des erfindungsgemäßen Verfahrens, insbesondere wenn es für das Ausführen dieser Funktionen entsprechend trainiert ist. Dadurch, dass das interne KI-System sicherheitsrelevante Daten in der Anfrage erkennt und automatisch eine oder mehrere Maßnahmen ergreift um zu verhindern, dass die sicherheitsrelevanten Daten im Zuge einer ausgelösten Anfrage von dem internen KI-System an das externe KI-System übermittelt werden, erreicht es die oben beschriebenen Vorteile.

Von Bedeutung für die vorliegende Erfindung ist außerdem, dass die vorgeschlagene Lösung der zugrundeliegenden Aufgabe für unterschiedlichste Datenformate anwendbar ist. Insbesondere ist das erfindungsgemäße Verfahren nicht darauf beschränkt, dass Anfragen an das interne KI-System in Textform oder in gesprochener Sprache gestellt und gegebenenfalls zumindest Teile hiervon in dieser Form an ein externes KI-System weitergeleitet werden sollen. Vielmehr ermöglicht es die Erfindung, auch Informationen, die in anderen Formaten vorliegen und beispielsweise in Bilddaten, Videodaten oder sonstigen Audiodaten enthalten sind, auf die oben beschrieben Weise zu behandeln und insbesondere zu entscheiden, ob die darin enthaltenen Informationen als vertraulich einzustufen sind und ob sowie gegebenenfalls auf welche Weise sie verändert werden sollen, bevor sie an ein externes KI-System weitergeleitet werden. Somit ist die Erfindung keinesfalls auf interne Chatbots beschränkt. Diese stellen lediglich eine mögliche Realisierung eines internen KI-Systems dar.

Weitere Merkmale und Vorteile der vorliegenden Erfindung werden nachfolgend unter Bezugnahme auf die Figuren näher erläutert. Es wird betont, dass einzelnen in den Figuren gezeigte Merkmale auch für sich alleine erfindungswesentlich sein können, selbst wenn dies in den Figuren nicht gezeigt und in der Beschreibung nicht ausdrücklich erwähnt ist. Ferner können die einzelnen in den Figuren gezeigten Merkmale in einer beliebigen Weise miteinander kombiniert werden, selbst wenn diese Kombination in den Figuren nicht gezeigt und in der Beschreibung nicht ausdrücklich erwähnt ist. Es zeigen:
- Figur 1: ein Blockdiagramm umfassend ein internes KI-System, auf dem das erfindungsgemäße Verfahren ablauffähig ist, und
- Figur 2: ein schematisiertes Ablaufdiagramm einer möglichen Ausführungsform des erfindungsgemäßen Verfahrens.

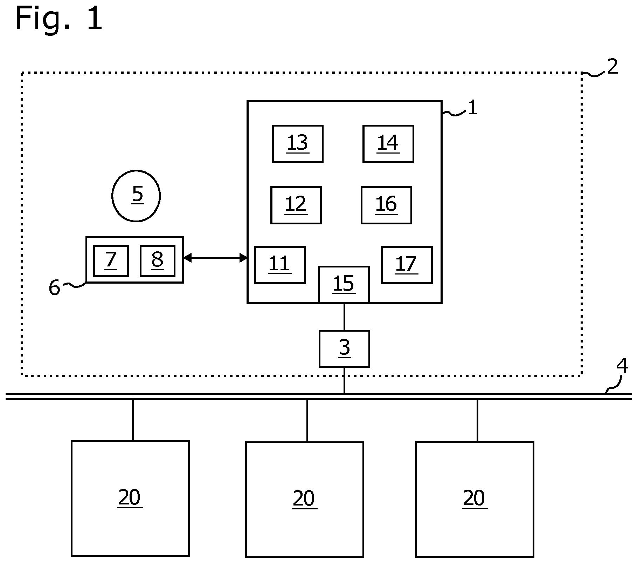

In Figur 1 ist ein internes KI-System 1 gezeigt, das beispielsweise als ein interner Chatbot ausgebildet sein kann, der in einem als Intranet 2 bezeichneten internen Netzwerk angeordnet ist. Das Intranet 2 ist über eine Firewall 3 mit dem Internet 4 verbunden. Die Verwendung des Begriffs "intern" und "Intranet" im Kontext der Erfindung bedeutet in der Regel, "innerhalb eines Unternehmens" oder "Unternehmensnetzwerk".

Das interne KI-System 1 kann aus einer Mehrzahl von unterschiedlichen Komponenten aufgebaut sein, deren Funktionsumfang und Benennung variiert und insbesondere von dem vorgesehenen Einsatzzweck des internen KI-Systems 1 sowie der betrachteten Detailtiefe der einzelnen Komponenten abhängt.

In Figur 1 wird bespielhaft davon ausgegangen, dass das interne KI-System 1 als Chatbot in erster Linie für unternehmensinterne Anwendungen eingesetzt wird, um die Mitarbeiter des Unternehmens bei ihrem Tagesgeschäft mit dem notwendigen Wissen zu unterstützen und gegebenenfalls Aktionen selbstständig durchzuführen, wie bspw. das Versenden von Angeboten an Interessenten/ potenzielle Kunden oder das Zusammenstellen von Unterlagen für die Finanzbuchhaltung. Selbstverständlich sind eine Vielzahl weiterer Einsatzbereiche sowie Aufgaben, die mehr oder weniger selbständig von dem internen KI-System in einem Unternehmen durchgeführt werden können, vorstellbar.

Der Chatbot umfasst in dem hier gezeigten Ausführungsbeispiel unter anderem die folgenden Komponenten, die miteinander zusammenarbeiten, um das interne KI-System 1 zu bilden:
Eine Benutzerschnittstelle 11 ist die Funktionseinheit des Chatbots, die es einem Benutzer 5 ermöglicht, mit dem Chatbot zu interagieren. Diese Interaktion kann von dem Benutzer 5 mittels eines hierfür ausgebildeten Client 6 erfolgen, wobei der Client 6 beispielsweise als ein Laptop, ein Tablet oder ein Smartphone ausgebildet sein kann. Auf dem Client 6 werden Softwarekomponenten 7 ausgeführt, die beispielsweise ein Textfeld in einer sogenannten Messenger-App oder eine sogenannte Chatbox, die in einem Browser des Clients 6 abläuft, für die Kommunikation mit dem Chatbot über die Benutzerschnittstelle 11 zur Verfügung stellen.

Die Benutzerschnittstelle 11 kann auch derart ausgebildet sein, dass sie eine Sprachsteuerungsschnittstelle umfasst, so dass der Benutzer 5 beispielsweise über eine dem Client 6 zugeordnete Audio-Einheit 8, die ein Mikrofon und einen Lausprecher umfasst, mit dem als Chatbot ausgebildeten internen KI-System 1 mit gesprochenen Worten kommunizieren kann.

Der Chatbot verfügt über eine Funktionseinheit für die natürliche Sprachverarbeitung (Natural Language Processing, NLP), die sogenannte NLP-Komponente 12, die es dem Chatbot ermöglicht, menschliche Sprache zu verarbeiten und auszuwerten, was als ein "Verstehen" der Sprache bezeichnet werden kann, und darauf zu reagieren. Sie umfasst beispielsweise Funktionen wie Spracherkennung, Entitäts-Extraktion, Absichtserkennung und Dialogmanagement.

Das als Chatbot ausgebildete interne KI-System 1 umfasst des Weiteren eine Wissensdatenbank 13. Die Wissensdatenbank 13 enthält Informationen, Datenbanken oder Wissensquellen, auf die der Chatbot zugreifen kann, um Antworten auf Benutzeranfragen zu generieren. Insgesamt dient die Wissensdatenbank 13 als Grundlage für die Funktionsweise des Chatbots und ermöglicht es ihm, auf Anfragen der Benutzer 5 effektiv zu antworten und sie mit relevanten zusätzlichen Informationen oder Antworten zu versorgen.

Eine Dialog-Management Komponente 14 steuert den Fluss der Kommunikation zwischen dem Benutzer 5 und dem Chatbot. Die Dialog-Management Komponente 14 sorgt dafür, dass der Chatbot angemessen auf Benutzeranfragen reagiert und das Gespräch aufrechterhält.

Ein Konnektor-Integrationsmodul 15 ermöglicht es dem Chatbot, mit externen Systemen, Datenbanken oder APIs zu kommunizieren, um Informationen abzurufen oder Aktionen auszuführen. Derartige externe Systeme können insbesondere externe KI-Systeme sein, die auf eine weitere Anfrage hin weiterführende und aufbereitete Informationen zur Verfügung stellen, über die der Chatbot nicht verfügt, falls diese Informationen nicht in der ihm zugeordneten Wissensdatenbank 13 enthalten sind.

Ein Optimierungsmodul 16 umfasst Funktionen zur Analyse und Verbesserung des Verhaltens des Chatbots. Hierzu werden beispielsweise Chatprotokolle erstellt und ausgewertet und mit Informationen aus einem Benutzerfeedback sowie erfassten Leistungsdaten in geeigneter Weise kombiniert, um den Chatbot kontinuierlich zu verbessern und an die aktuellen Aufgaben anzupassen.

Ein Sicherheitsmodul 17 umfasst Funktionen, um die Sicherheit der Benutzerdaten und die Einhaltung von Datenschutzbestimmungen während der Interaktion mit dem Chatbot zu gewährleisten.

Die oben dargestellten Komponenten des internen KI-Systems 1 arbeiten zusammen und ermöglichen es dem Chatbot, natürliche Gespräche mit Benutzern 5 zu führen, ihre Anfragen zu verstehen und angemessen darauf zu reagieren. Hierzu wird der Chatbot in Abhängigkeit von dem geplanten Einsatzzweck konfiguriert bzw. trainiert und sein Verhalten ggfs. adjustiert.

Während des Konfigurierens eines Chatbots werden relevante Informationen und Wissen aus verschiedenen Quellen gesammelt, beispielsweise Unternehmensdokumentationen, FAQs, Produktbeschreibungen, Handbücher, Datenbanken, interne Websites und mehr. Diese gesammelten Informationen werden strukturiert und in einer für den Chatbot verständlichen Form aufbereitet. Dies kann durch Kategorisierung, Tagging, Indexierung und andere Methoden erfolgen. Die strukturierten Daten werden in die Wissensdatenbank 13 des internen KI-Systems 1 integriert, damit der Chatbot darauf zugreifen und relevante Informationen abrufen kann.

Wenn ein Benutzer 5 eine Anfrage an den Chatbot stellt, analysiert das KI-System 1 die über die Benutzerschnittstelle 11 empfangene Eingabe an Informationen und versucht, die relevantesten Informationen für die Antwort auf die Anfrage aus der Wissensdatenbank 13 abzurufen. Basierend auf den abgerufenen Informationen generiert der Chatbot eine passende Antwort, die dem Benutzer 5 mittels des Clients 6 präsentiert wird. Dies kann in Form von Text, Links, Bildern oder anderen Medien erfolgen.

Die Wissensdatenbank 13 wird regelmäßig aktualisiert, um sicherzustellen, dass die Informationen aktuell und korrekt sind.

In Figur 1 sind externe KI-Systeme 20 gezeigt, die ebenfalls als Chatbots ausgebildet sein können und grundsätzlich dieselben Komponenten aufweisen können wie das interne KI-System 1. Für das weitere Verständnis der vorliegenden Erfindung wird davon ausgegangen, dass das interne KI-System innerhalb des Intranets 2 eines Unternehmens eingesetzt wird und mit den KI-Systemen 20 über die Firewall 3 und das Internet 4 verbunden ist, so dass eine Kommunikation zwischen dem internen KI-System 1 und den externen KI-Systemen 20 über das Internet 4 möglich ist.

Stellt ein Benutzer 5 eine Frage an das KI-System 1 mittels des Client 6, so wird diese Frage zunächst mithilfe des intern verfügbaren Wissens, das insbesondere in der Wissensdatenbank 13 abgelegt ist, beantwortet. Ist dieses Wissen nicht ausreichend um die Frage zu beantworten, stellt das interne KI-System 1 dies fest und richtet eine entsprechende weitere Anfrage an mindestens ein externes KI-System 20, das die entsprechende Antwort bzw. die entsprechenden zusätzlichen Informationen, bevorzugt aus einer eigenen Wissensdatenbank, zur Verfügung stellt.

Das externe KI-System 20 verfügt beispielsweise über eine Wissensdatenbank, die auf Grundlage eines Großteils der über das Internet 4 abrufbaren Informationen aufgebaut ist. Dies kann alltägliche Informationen wie eine Wettervorhersage umfassen oder ganz spezielle wissenschaftliche Informationen, die von hierfür geeigneten Portalen abrufbar sind oder die aufgrund des Trainierens des externen KI-Systems 20 durch das Scannen der bei Bibliotheken elektronisch abgespeicherten Informationen abrufbar ist. Das externe KI-System 20 sendet eine Antwort auf die Anfrage an das interne KI-System 1 zurück. Vorzugsweise bereitet das interne KI-System 1 die von dem externen KI-System 20 erhaltenen zusätzlichen Informationen auf, kombiniert sie gegebenenfalls mit Informationen, die in der internen Wissensdatenbank 13 enthalten sind, erzeugt eine Antwort in einem geeigneten Format und sendet diese Antwort an den Client 6 des anfragenden Benutzers 5 zurück.

Die weitere Anfrage von dem internen KI-System 1 an das externe KI-System 20 kann Informationen umfassen, die gemäß einer unternehmensinternen oder sonstigen Sicherheitsrichtlinie des Unternehmens, das den internen Chatbot betreibt, als sicherheitsrelevant einzustufen sind und deshalb nicht nach außen gelangen sollen. Zwar ist es aktuell möglich, bei dem Betreiber eines externen KI-Systems 20 einen gesicherten Speicherbereich zu reservieren, so dass eine Weitergabe von internen Informationen verhindert wird. Dennoch ist es vorstellbar, dass eine versehentliche/ ungewollte Weitergabe dieser Informationen beispielsweise aufgrund eines technischen Defekts in dem Serversystem des Betreibers des externen KI-Systems 20 oder aufgrund eines Hackerangriffs erfolgt. Deshalb sind Unternehmen bestrebt, das interne KI-System 1 vollständig von dem Internet 4 zu trennen, wodurch allerdings der Funktionsumfang und insbesondere die Qualität der Beantwortung der Anfragen des Benutzers 5 reduziert werden, da nur noch das interne KI-System 1 zur Verfügung steht.

Hier kann die vorliegende Erfindung Abhilfe schaffen, indem eine Anfrage des Benutzers 5 an das interne KI-System 1 eine weitere Anfrage an das externe KI-System 20 auslöst. Das interne KI-System 1 ist darauf trainiert zu erkennen, ob eine im Rahmen der weiteren Anfrage an das externe KI-System 20 zu übermittelnde Information eine vertrauliche Information ist oder eine solche enthält und falls dies der Fall ist, diese vertrauliche Information oder zumindest den vertraulichen Teil der Information dahingehend zu verändern, dass Vertraulichkeit gewahrt bleibt. Im Rahmen der weiteren Anfrage des internen KI-Systems 1 an das externe KI-System 20 werden einfach die veränderten Informationen übermittelt. Über diese können von dem externen KI-System 20 zusätzliche Informationen abgerufen werden, die für die Beantwortung der Anfrage des Benutzers 5 an das interne KI-System 1 helfen. Das interne KI-System 1 ist bevorzugt ausgebildet, die Antwort des externen KI-Systems 20 mit den auf den veränderten Informationen beruhenden zusätzlichen Informationen, so anzupassen bzw. zu verändern, dass die angepasste bzw. veränderte Antwort zur Beantwortung der Anfrage an das interne KI-System 1 herangezogen werden kann.

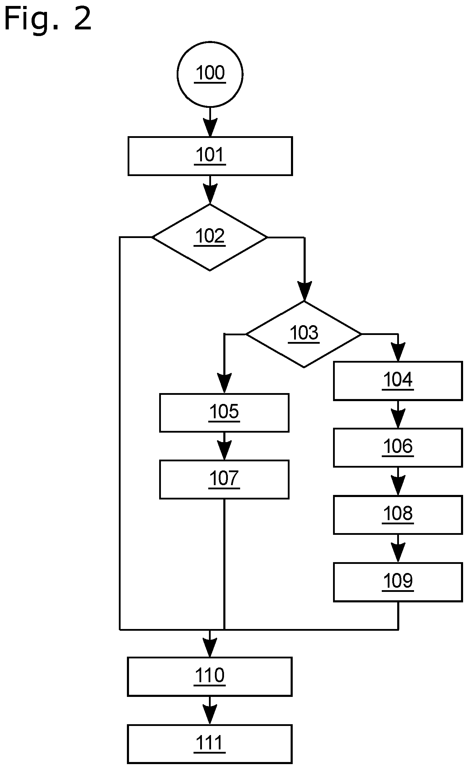

Figur 2 zeigt ein schematisiertes Ablaufdiagramm einer möglichen Realisierung des erfindungsgemäßen Verfahrens.

Das Verfahren beginnt in einem Schritt 100, in welchem ein Benutzer 5 eine Anfrage an ein als interner Chatbot ausgebildetes internes KI-System 1 richtet.

In einem Schritt 101 bearbeitet das interne KI-System 1 die Anfrage und interagiert mit der internen Wissensdatenbank 13, um die Anfrage zu beantworten.

In einem Schritt 102 prüft das interne KI-System 1, ob die von der Wissensdatenbank 13 und gegebenenfalls anderen internen Informationsquellen, die in dem Intranet verfügbar und für eine Abfrage von Informationen durch das interne KI-System 1 eingerichtet sind, zur Verfügung stehenden Informationen ausreichend sind, um die Anfrage zufriedenstellend zu beantworten.

Ist dies der Fall, so generiert das interne KI-System 1 in einem Schritt 110 auf Grundlage der verfügbaren Informationen eine Antwort und übermittelt diese Antwort in einem Schritt 111 an den Client 6.

Entscheidet das interne KI-System 1 in dem Schritt 102 jedoch, dass die Informationen aus den intern verfügbaren Informationsquellen nicht ausreichen, um die Anfrage zu beantworten, so prüft es in einem Schritt 103, ob eine Anfrage nach weiteren Informationen von einem externen KI-System 20 das Übermitteln von vertraulichen Daten erfordert. Vertrauliche Daten könnten beispielsweise Daten von Mitarbeitern oder Kunden sein, Daten bezüglich finanzieller Angelegenheiten des Unternehmens sowie sonstige Betriebsgeheimnisse.

Entscheidet das interne KI-System 1 in dem Schritt 103, dass eine Kommunikation mit dem externen KI-System 20 ohne das Übermitteln vertraulicher Daten möglich ist, so sendet das KI-System 1 in einem Schritt 105 eine Anfrage an das externe KI-System 20.

In einem Schritt 107 erhält das externe KI-System 20 die Anfrage, bearbeitet diese und sendet eine Antwort an das interne KI-System 1 zurück. Das interne KI-System 1 generiert daraufhin in dem Schritt 110 auf Grundlage der intern verfügbaren Informationen sowie den von dem externen KI-System 20 erhaltenen Informationen eine Antwort und übermittelt diese Antwort in dem Schritt 111 an den Client 6.

Erkennt das interne KI-System 1 in dem Schritt 103 jedoch, dass eine Anfrage an das externe KI-System 20 das Senden einer vertraulichen Information erfordert, so verschlüsselt es in einem Schritt 104 die vertraulichen Informationen, so dass diese nicht mehr gelesen werden können.

In einem Schritt 106 sendet das KI-System 1 eine Anfrage an das externe KI-System 20, wobei diese Anfrage die verschlüsselten vertraulichen Informationen umfasst.

In einem Schritt 108 erhält das externe KI-System 20 die Anfrage, bearbeitet diese und sendet eine Antwort an das interne KI-System 1 zurück.

In einem Schritt 109 entschlüsselt das KI-System 1 die in der von dem externen KI-System 20 enthaltenen verschlüsselten vertraulichen Informationen und generiert daraufhin in dem Schritt 110 auf Grundlage der intern verfügbaren Informationen sowie den von dem externen KI-System 20 erhaltenen Informationen und den entschlüsselten vertraulichen Informationen eine Antwort und übermittelt diese Antwort in dem Schritt 111 an den Client 6.

Ausgehend von dem in Figur 2 gezeigten Ausführungsbeispiel sind eine Mehrzahl weiterer Ausführungsformen möglich, die in den nachfolgenden Patentansprüchen benannt sind.

So ist es beispielsweise gemäß einer bevorzugten Weiterbildung des erfindungsgemäßen Verfahrens möglich, dass das interne KI-System 1 derart trainiert ist, dass es nicht nur das Vorliegen einer vertraulichen Information erkennt, sondern auch beispielsweise mittels eines numerischen Wertes angibt, wie hoch die Vertraulichkeit dieser Information ist. Beispielsweise kann vorgesehen sein, dass die vertraulichen Daten in drei Stufen (gering, mittel, hoch) eingeteilt werden.

Erkennt das interne KI-System 1 dann in dem Schritt 103, dass vertrauliche Informationen an ein externes KI-System 20 gesendet werden müssen, um weitere Informationen zur Beantwortung der von dem Benutzer gestellten Frage zu erhalten, so kann es in dem Schritt 104 in Abhängigkeit von der Vertraulichkeitsstufe der vertraulichen Informationen eine Strategie für das Übersenden der vertraulichen Informationen an das externe KI-System 20 wählen.

Beispielsweise kann vorgesehen sein, dass gering vertrauliche Daten mittels eines einfachen Hash-Algorithmus verschlüsselt und an das externe KI-System 20 gesendet werden. Für vertrauliche Daten mittlerer Stufe kann vorgesehen sein, dass diese mittels eine homomorphen Verschlüsselung verschlüsselt an das externe KI-System 20 gesendet werden und für hoch vertrauliche Informationen kann vorgesehen sein, dass überhaupt keine Anfrage an das externe KI-System 20 gesendet wird oder es kann vorgesehen sein, eine Anfrage an den Benutzer zu stellen, ob er detailliertere Informationen benötigt und die hoch vertraulichen Informationen hierzu ausnahmsweise dennoch verschlüsselt an das externe KI-System 20 gesendet werden sollen.

Selbstverständlich kann das interne KI-System 1 gemäß der zu erfüllenden Aufgabe trainiert werden und dies kann insbesondere eine Entscheidung über die Anzahl der unterschiedlichen Vertraulichkeitsstufen für die internen Informationen umfassen sowie, welche Strategie für das Versenden von vertraulichen Informationen an externe KI-Systeme 20 gewählt wird.

Insbesondere kann auch ein Grad des bei dem externen KI-System 20 realisierten Datenschutzes bei der Entscheidung miteinbezogen werden, ob eine vertrauliche Information an dieses externe KI-System 20 gesendet wird und ob bzw. mittels welchen Verfahrens eine Verschlüsselung der vertraulichen Informationen erfolgen soll.

## Patentansprüche

1. Verfahren zur Kommunikation eines internen KI-Systems (1) mit einem externen KI-System (20), wobei eine Anfrage an das interne KI-System (1) eine weitere Anfrage an das externe KI-System (20) auslösen kann,
**dadurch gekennzeichnet, dass**
das interne KI-System (1) darauf trainiert ist zu erkennen, ob eine im Rahmen der weiteren Anfrage an das externe KI-System (20) zu übermittelnde Information eine vertrauliche Information ist, und falls dies der Fall ist, diese Information dahingehend verändert wird, dass die Vertraulichkeit der vertraulichen Information gewahrt bleibt, und die veränderte Information im Rahmen der weiteren Anfrage an das externe KI-System (20) zum Abrufen zusätzlicher Informationen von dem externen KI-System (20) übermittelt wird.

2. Verfahren nach Anspruch 1, **dadurch gekennzeichnet, dass** eine Antwort mit zusätzlichen Informationen des externen KI-Systems (20) auf die weitere Anfrage des internen KI-Systems (1) derart verändert wird, dass sie als Antwort auf die Anfrage an das interne KI-System (1) herangezogen werden kann.

3. Verfahren nach Anspruch 1 oder 2, **dadurch gekennzeichnet, dass** eine vertrauliche Information, die von dem internen KI-System (1) an das externe KI-System (20) gesendet werden soll, vor dem Übermitteln an das externe KI-System (20) automatisch verschlüsselt wird und - falls in der Antwort von dem externen KI-System (20) eine verschlüsselte Information enthalten ist - diese automatisch entschlüsselt wird.

4. Verfahren nach einem der vorhergehenden Ansprüche, **dadurch gekennzeichnet, dass** das interne KI-System (1) einen Chatbot umfasst.

5. Verfahren nach einem der vorhergehenden Ansprüche, **dadurch gekennzeichnet, dass** die im Rahmen der weiteren Anfrage an das externe KI-System (20) zu übermittelnde Information bezüglich einer Vertraulichkeitsstufe klassifiziert und in Abhängigkeit von der jeweiligen Vertraulichkeitsstufe entschieden wird, auf welche Weise eine als vertraulich klassifizierte Information vor dem Senden an das externe KI-System (20) verändert wird.

6. Verfahren nach einem der vorhergehenden Ansprüche, **dadurch gekennzeichnet, dass** für eine Information, deren Vertraulichkeitsstufe einen vorgebbaren Wert überschreiten, das Senden dieser Information an das externe KI-System (20) verhindert wird.

7. Verfahren nach einem der vorhergehenden Ansprüche, **dadurch gekennzeichnet, dass** die vertrauliche Information mittels einer homomorphen Verschlüsselung vor dem Weiterleiten an das externe KI-System (20) verschlüsselt wird.

8. Verfahren nach einem der vorhergehenden Ansprüche, **dadurch gekennzeichnet, dass** eine Mehrzahl von externen KI-Systemen (20) von dem internen KI-System (1) um Antworten und zusätzliche Informationen angefragt werden und das für jedes der externen KI-Systeme (20) separat entschieden wird, ob überhaupt und gegebenenfalls wie eine vertrauliche Information vor dem Senden an das jeweilige externe KI-System (20) verändert wird.

9. Verfahren nach einem der vorhergehenden Ansprüche, **dadurch gekennzeichnet, dass** eine Mehrzahl von externen KI-Systemen (20) von dem internen KI-System (1) um Antworten und zusätzliche Informationen angefragt werden und eine bestimmte weitere Anfrage parallel an mindestens zwei externe KI-Systeme (20) übermittelt wird, nach Erhalt der Antworten von den angefragten externen KI-Systemen (20) automatisch eine Plausibilitätsprüfung der erhaltenen Antworten durchführt wird und nur diejenigen Antworten einer weiteren Verarbeitung zugeführt werden, deren Plausibilität festgestellt wurde.

10. Internes KI-System (1), das ausgebildet ist, bei einer Anfrage an das interne KI-System (1) eine weitere Anfrage an mindestens ein externes KI-System (20) auszulösen,
**dadurch gekennzeichnet, dass**
das interne KI-System (1) darauf trainiert ist zu erkennen, ob eine im Rahmen einer weiteren Anfrage an ein externes KI-System (20) zu übermittelnde Information eine vertrauliche Information ist und
das interne KI-System (1) darauf trainiert ist, - falls die im Rahmen der weiteren Anfrage an das externe KI-System (20) zu übermittelnde Information eine vertrauliche Information ist - automatisch zu entscheiden, ob die vertrauliche Information überhaupt an das externe KI-System (20) übermittelt oder dahingehend verändert werden soll, dass ihre Vertraulichkeit bewahrt bleibt, und
das interne KI-System (1) ausgebildet ist, im Rahmen der weiteren Anfrage die veränderte Information an das externe KI-System (20) zu übermitteln, und
als Antwort auf die weitere Anfrage eine Antwort mit zusätzlichen Informationen von dem externen KI-System (20) zu empfangen.

11. Internes KI-System (1), **dadurch gekennzeichnet, dass** das interne KI-System (1) ausgebildet ist, die Antwort des externen KI-Systems (20) mit den zusätzlichen Informationen derart zu verändern, dass die veränderte Antwort als Antwort auf die Anfrage an das interne KI-System (1) dient.

12. Internes KI-System (1) nach Anspruch 10 oder 11, **dadurch gekennzeichnet, dass** das interne KI-System (1) zur Durchführung eines Verfahrens nach einem der Ansprüche 3 bis 9 eingerichtet ist.
